# EUROPEAN PATENT APPLICATION

(11) **EP 4 814 069 A1**
(43) Date of publication of application: **30.09.2026**
(21) Application number: 24893806.0
(22) Date of filing: 30.07.2024
(51) Int. Cl.: C09D 133/04, C09D 5/02, C09D 133/14

(54) **AQUEOUS COATING COMPOSITION**

(30) Priority: 24.11.2023 JP 2023199319
(71) Applicant: Nippon Paint Automotive Coatings Co., Ltd., Hirakata-shi, Osaka 573-1153 (JP)
(72) Inventor: KITAMURA, Naotaka, Hirakata-shi, Osaka 573-1153 (JP); YAMANAKA, Eiji, Hirakata-shi, Osaka 573-1153 (JP); ENDOU, Yusuke, Hirakata-shi, Osaka 573-1153 (JP); ICHIMURA, Hideki, Hirakata-shi, Osaka 573-1153 (JP)
(74) Representative: Mewburn Ellis LLP
(86) International application number: PCT/JP2024/027089
(87) International publication number: WO 2025/109811

(57) **Abstract**

An aqueous coating composition including: a hydroxy group-containing acrylic resin emulsion (A); a core-shell type acrylic resin dispersion (B); and a hydrophobic melamine resin (C), wherein the core-shell type acrylic resin dispersion (B) has a branched hydrocarbon group having 4 to 24 carbon atoms in a core part, a shell part has a hydrophilic resin, and a solid component mass ratio (A : B) of the hydroxy group-containing acrylic resin emulsion (A) to the core-shell type acrylic resin dispersion (B) is 30 : 70 to 90 : 10.

## Description

### TECHNICAL FIELD

The present invention relates to an aqueous coating composition.

In recent years, environmental pollution has become serious, and emission regulations of organic solvents have been strengthened internationally. In the field of coating materials as well, transition from conventional organic solvent-based coating materials to aqueous coating materials using water as a medium has progressed. Patent Document 1 discloses an aqueous coating composition containing a hydrophobic melamine resin.

### PRIOR ART DOCUMENT

### PATENT DOCUMENT

Patent Document 1: JP 2020-002244 A

### SUMMARY OF THE INVENTION

### PROBLEMS TO BE SOLVED BY THE INVENTION

In the aqueous coating composition, the dispersibility of the hydrophobic melamine resin is prone to decrease. When the dispersibility of the resin component is decreased, the storage stability of the coating composition and the appearance of the resulting coating film are deteriorated.

An object of the present invention is to provide an aqueous coating composition from which a coating film that is excellent in appearance and inhibited from yellowing can be obtained while water resistance is ensured.

### SOLUTIONS TO THE PROBLEMS

To solve the problems described above, the present invention provides the following embodiments.
[1] An aqueous coating composition including:
   a hydroxy group-containing acrylic resin emulsion (A);
   a core-shell type acrylic resin dispersion (B); and
   a hydrophobic melamine resin (C), wherein
   the core-shell type acrylic resin dispersion (B) has a branched hydrocarbon group having 4 to 24 carbon atoms in a core part, a shell part has a hydrophilic resin, and
   a solid component mass ratio (A : B) of the hydroxy group-containing acrylic resin emulsion (A) to the core-shell type acrylic resin dispersion (B) is 30 : 70 to 90 : 10.
[2] The aqueous coating composition according to [1], wherein a solid component mass ratio (B : C) of the core-shell type acrylic resin dispersion (B) to the hydrophobic melamine resin (C) is 10 : 90 to 50 : 50.
[3] The aqueous coating composition according to [1] or [2], wherein the core-shell type acrylic resin dispersion (B) has an acid value of 25 mg KOH/g or more and 50 mg KOH/g or less.
[4] The aqueous coating composition according to any one of [1] to [3], wherein the core-shell type acrylic resin dispersion (B) has a weight average molecular weight of 7,600 or more and 80,000 or less.

### EFFECTS OF THE INVENTION

According to the present invention, an aqueous coating composition from which a coating film being excellent in appearance and inhibited from yellowing can be obtained while water resistance is ensured is provided.

### DETAILED DESCRIPTION

When a hydrophobic melamine resin is used as a curing component in an aqueous coating composition, the water resistance of a resulting coating film is improved. On the other hand, in the aqueous coating composition, the hydrophobic melamine resin is poor in dispersibility. In the present disclosure, the dispersibility of a hydrophobic melamine resin in an aqueous solvent is improved, and as a result, the storage stability of an aqueous coating composition and the appearance of an excellent coating film are improved.

In the present disclosure, at least two aqueous acrylic resins having different forms are used. In general, aqueous resins are roughly classified into those of a water-soluble type and those of a water-dispersible type. The water-dispersible type is further divided into a dispersion type (this is commonly referred to as colloidal dispersion type) and an emulsion type. A colloidal dispersion type aqueous resin is typically obtained by semi-dissolving a resin synthesized in an organic solvent in water with a neutralizing agent. The emulsion type aqueous resin is typically produced by emulsion polymerization or by mechanical forced emulsification.

The aqueous acrylic resins to be used in the present disclosure are an emulsion type hydroxy group-containing acrylic resin emulsion (A) produced by emulsion polymerization and a colloidal dispersion type core-shell type acrylic resin dispersion (B). The hydroxy group-containing acrylic resin emulsion (A) secures coating film properties (for example, strength). The core-shell type acrylic resin dispersion (B) enhances the dispersibility of the hydrophobic melamine resin.

The core-shell type acrylic resin dispersion (B) has a branched hydrocarbon group having 4 to 24 carbon atoms in the core part and a hydrophilic resin in the shell part. The hydrocarbon group increases the hydrophobicity of the core part and improves the affinity between the core part and the hydrophobic melamine resin. The hydrophilic resin of the shell part enhances the water dispersibility of the core-shell type acrylic resin dispersion (B). That is, as a result of fine dispersion of the core-shell type acrylic resin dispersion (B) in an aqueous solvent in a state of capturing the hydrophobic melamine resin, aggregation of the hydrophobic melamine resin is inhibited and the dispersion state is maintained.

The hydroxy group-containing acrylic resin emulsion (A) and the core-shell type acrylic resin dispersion (B) can be fractionated, for example, by centrifuging the aqueous coating composition. The weight average molecular weight of each of the plurality of fractionated acrylic resins is determined, and any one having a weight average molecular weight of more than 100,000 can be regarded as being of an emulsion type, and any one having a weight average molecular weight of 100,000 or less can be regarded as being of a colloidal dispersion type. If the weight average molecular weight exceeds 1,000,000, it becomes difficult to measure the weight average molecular weight. Any acrylic resin whose weight average molecular weight cannot be measured may be regarded as being of an emulsion type.

The acrylic resin hardly causes yellowing due to ultraviolet rays or the like. Thanks to the use of the core-shell type acrylic resin dispersion (B) as a dispersion component of the hydrophobic melamine resin, a coating film being excellent in appearance and inhibited from yellowing can be obtained while water resistance is ensured.

The solid concentration is calculated from the residue remaining when the object is heated at 150°C.

The average particle size is a 50% average particle size (D50) in a volume-based particle size distribution determined using a laser diffraction/scattering type particle size distribution analyzer.

The acid value and the hydroxyl value may be calculated from the composition of the starting monomers on the basis of JIS regulation, and may be determined by a neutralization titration method using an aqueous potassium hydroxide solution in accordance with JIS K 0070. The acid value and the hydroxyl value are values based on the solid content.

The weight average molecular weight and the number average molecular weight are measured with a polystyrene standard by GPC (gel permeation chromatography).

The term (meth)acrylic acid ester represents an acrylic acid ester and a methacrylic acid ester. The term (meth)acrylic acid represents methacrylic acid and acrylic acid.

### [Aqueous coating composition]

The aqueous coating composition according to the present disclosure comprises a hydroxy group-containing acrylic resin emulsion (A), a core-shell type acrylic resin dispersion (B), and a hydrophobic melamine resin (C). The core-shell type acrylic resin dispersion (B) has a branched hydrocarbon group having 4 to 24 carbon atoms in the core part and the shell part has a hydrophilic resin. The solid component mass ratio (A : B) of the hydroxy group-containing acrylic resin emulsion (A) to the core-shell type acrylic resin dispersion (B) is 30 : 70 to 90 : 10.

### · Hydroxy group-containing acrylic resin emulsion (A)

The hydroxy group-containing acrylic resin emulsion (A) refers to an acrylic resin prepared by an emulsion polymerization method. The hydroxy group-containing acrylic resin emulsion (A) (hereinafter sometimes simply referred to as acrylic resin emulsion (A)) is water-dispersible and is dispersed in a particulate form in an aqueous solvent.

The average particle size of the acrylic resin emulsion (A) is, for example, 20 nm or more and 200 nm or less. The average particle size of the acrylic resin emulsion (A) may be 30 nm or more, and may be 50 nm or more. The average particle size of the acrylic resin emulsion (A) may be 180 nm or less, and may be 140 nm or less.

The acrylic resin emulsion (A) may have a hydroxyl value of 20 mg KOH/g or more and 180 mg KOH/g or less. The acrylic resin emulsion (A) may have an acid value of 1 mg KOH/g or more and 80 mg KOH/g or less.

The solid content of the acrylic resin emulsion (A) is, for example, 20 parts by mass or more and 70 parts by mass or less per 100 parts by mass of the resin solid content of the aqueous coating composition. The aforementioned content of the acrylic resin emulsion (A) may be 25 parts by mass or more, and may be 30 parts by mass or more. The aforementioned content of the acrylic resin emulsion (A) may be 60 parts by mass or less, and may be 50 parts by mass or less.

### (Production method)

The acrylic resin emulsion (A) can be produced by emulsion polymerization of an α,β-ethylenically unsaturated monomer having a hydroxy group and another α,β-ethylenically unsaturated monomer. Examples of the other α,β-ethylenically unsaturated monomer include a (meth)acrylic acid ester and an α,β-ethylenically unsaturated monomer having an acid group.

Examples of the α,β-ethylenically unsaturated monomer having a hydroxy group include hydroxyethyl (meth)acrylate, hydroxypropyl (meth)acrylate, hydroxybutyl (meth)acrylate, allyl alcohol, methallyl alcohol, and adducts of these with ε-caprolactone. These are used singly or two or more of them are used in combination.

Examples of the (meth)acrylic acid ester include methyl (meth)acrylate, ethyl (meth)acrylate, propyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, and dihydrodicyclopentadienyl (meth)acrylate. These are used singly or two or more of them are used in combination.

Examples of the α,β-ethylenically unsaturated monomer having an acid group include acrylic acid, methacrylic acid, crotonic acid, 2-acryloyloxyethylphthalic acid, 2-acryloyloxyethylsuccinic acid, ω-carboxy-polycaprolactone mono(meth)acrylate, isocrotonic acid, α-hydro-ω-((1-oxo-2-propenyl)oxy) poly(oxy(1-oxo-1,6-hexanediyl)), maleic acid, fumaric acid, itaconic acid, 3-vinylsalicylic acid, 3-vinylacetylsalicylic acid, 2-acrylamido-2-methylpropanesulfonic acid, p-hydroxystyrene, and 2,4-dihydroxy-4'-vinylbenzophenone. These are used singly or two or more of them are used in combination.

Another α,β-ethylenically unsaturated monomer may be used in combination. Examples of the other α,β-ethylenically unsaturated monomer include a polymerizable amide compound, a polymerizable aromatic compound, a polymerizable nitrile, a polymerizable alkylene oxide compound, a polyfunctional vinyl compound, a polymerizable amine compound, an α-olefin, a diene, a polymerizable carbonyl compound, a polymerizable alkoxysilyl compound, and other polymerizable compounds. These are used singly or two or more of them are used in combination.

The method of emulsion polymerization is not particularly limited. For example, an emulsifier is dissolved in water or an aqueous medium containing an organic solvent such as an alcohol, an ether (for example, dipropylene glycol methyl ether or propylene glycol methyl ether) as necessary, and an α,β-ethylenically unsaturated monomer and a polymerization initiator are added dropwise under heating and stirring. The α,β-ethylenically unsaturated monomer may be emulsified in advance with an emulsifier.

Examples of the emulsifier include: anionic emulsifiers such as soaps, alkylsulfonate salts, and polyoxyethylene alkyl sulfate salts; nonionic emulsifiers such as polyoxyethylene alkyl ethers, polyoxyethylene alkylphenyl ethers, polypropylene glycol ethylene oxide adducts, polyethylene glycol fatty acid esters, and polyoxyethylene sorbitan fatty acid esters; and reactive surfactants such as a nonionic surfactant having a polyoxyethylene alkylphenyl ether as a basic structure and a radically polymerizable propenyl group introduced into a hydrophobic group, a cationic surfactant having a quaternary ammonium salt structure, and an anionic surfactant having a sulfonic acid group, a sulfonate group, a sulfate ester group, and/or an ethyleneoxy group and having a radically polymerizable carbon-carbon double bond. These are used singly or two or more of them are used in combination. The emulsifier is used in an amount of, for example, 0.5 parts by mass or more and 10 parts by mass or less based on 100 parts by mass of the starting monomers in terms of solid content.

The polymerization initiator is not particularly limited, and examples thereof include a water-soluble polymerization initiator or an oil-soluble polymerization initiator. Examples of the water-soluble polymerization initiator include persulfate initiators such as ammonium persulfate, sodium persulfate, and potassium persulfate; and inorganic initiators such as hydrogen peroxide. Examples of the oil-soluble polymerization initiator include organic peroxides such as benzoyl peroxide, t-butyl peroxybenzoate, t-butyl hydroperoxide, t-butyl peroxy(2-ethylhexanoate), t-butyl peroxy-3,5,5-trimethylhexanoate, and di-t-butyl peroxide; and azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobis-cyclohexane-1-carbonitrile. These are used singly or two or more of them are used in combination. The polymerization initiator is used in an amount of, for example, 0.01% by mass or more and 10% by mass or less of the starting monomers.

The polymerization conditions are not particularly limited. The polymerization temperature is, for example, 30°C or more and 90°C or less, and the polymerization time is, for example, 3 hours or more and 12 hours or less. The starting monomer concentration during the polymerization reaction is, for example, 30% by mass or more and 70% by mass or less.

A chain transfer agent, such as a mercaptan (for example, lauryl mercaptan) and α-methylstyrene dimer, is used, as necessary.

After the emulsion polymerization, neutralization is conducted using a basic compound, as necessary. As the basic compound, an inorganic base or an organic base is used. Examples of the basic compound include organic bases such as ammonia, triethylamine, propylamine, dibutylamine, amylamine, 1-aminooctane, 2-dimethylaminoethanol, ethylaminoethanol, 2-diethylaminoethanol, 1-amino-2-propanol, 2-amino-1-propanol, 2-amino-2-methyl-1-propanol, 3-amino-1-propanol, 1-dimethylamino-2-propanol, 3-dimethylamino-1-propanol, 2-propylaminoethanol, ethoxypropylamine, aminobenzyl alcohol, morpholine; and inorganic bases such as sodium hydroxide and potassium hydroxide. These are used singly or two or more of them are used in combination. The basic compound is used, for example, in an amount of 0.2 mol or more and 1.0 mol or less (neutralization ratio: 20% or more and 100% or less) per 1 mol of the carboxyl groups contained in the polymer.

The neutralization ratio has the same meaning as the use equivalent of the basic compound with respect to the acid groups (for example, carboxy groups). The neutralization ratio is calculated by the following formula. $Neutralization ratio \left(mol%\right) \times \frac{Mass \left(g\right) of basic compound / equivalent of basic compound}{Acid value \left(mg KOH/g\right) of resin \times mass \left(g\right) of resin / 56.1 \times 1000}$

The acrylic resin emulsion (A) may be of a single layer type or of a core-shell type including a core part and a shell part. The acrylic resin emulsion (A) that is of a core-shell type can be prepared, for example, by a known production method described in JP-A-2002-12816.

### · Core-shell type acrylic resin dispersion (B)

The core-shell type acrylic resin dispersion (B) is a core-shell type acrylic resin prepared by a polymerization method without using an emulsifier (typically, a solution polymerization method). The core-shell type acrylic resin dispersion (B) (hereinafter sometimes simply referred to as acrylic resin dispersion (B)) is also water-dispersible, and is dispersed in a particulate form in the aqueous coating composition.

The average particle size of the acrylic resin dispersion (B) is, for example, 20 nm or more and 200 nm or less. The average particle size of the acrylic resin dispersion (B) may be 180 nm or less, may be 160 nm or less, may be 150 nm or less, and may be 100 nm or less. The average particle size of the acrylic resin dispersion (B) may be 25 nm or more, and may be 30 nm or more.

The weight average molecular weight of the acrylic resin dispersion (B) is, for example, 7,600 or more and 80,000 or less. Thanks to this configuration, when the aqueous coating composition according to the present disclosure is used for the formation of a base coating film, color reversion can also be inhibited.

The weight average molecular weight of the acrylic resin dispersion (B) may be 15,000 or more, may be 16,000 or more, and may be 20,000 or more. The weight average molecular weight of the acrylic resin dispersion (B) may be 60,000 or less, and may be 48,000 or less.

The acid value of the acrylic resin dispersion (B) may be 25 mg KOH/g or more and 50 mg KOH/g or less. Thanks to this configuration, the acrylic resin dispersion (B) has a small average particle size and a sharp distribution. Accordingly, when the aqueous coating composition according to the present disclosure is used for formation of a base coating film, color reversion can also be inhibited.

The acid value of the acrylic resin dispersion (B) may be 30 mg KOH/g or more, and may be 35 mg KOH/g or more. From the viewpoint of water resistance, the acid value of the acrylic resin dispersion (B) may be 50 mg KOH/g or less, and may be 45 mg KOH/g or less.

The color reversion refers to a phenomenon in which the components of the clear coating composition permeate and mix with a coating film underlying the clear coating composition (typically, a base coating film) to deteriorate designability. For example, in the case where the underlying layer is a colored base coating film having a luster pigment, when the components of the clear coating composition permeate the underlying layer, the arrangement of the luster pigment is disturbed, and a desired FF property (flip-flop property) cannot be obtained. Such decrease of the FF property is one example of the color reversion. Having resistance to color reversion can be regarded as a performance in which the designability that can be exhibited by the coating film underlying the clear coating film is not impaired by the clear coating composition. Although the reason is not clear, when the acid value and/or the weight average molecular weight of the acrylic resin dispersion (B) is within the above range, penetration of the clear coating composition into the base coating film hardly occurs, and color reversion can be inhibited.

The content of the acrylic resin dispersion (B) is, for example, 3 parts by mass or more and 50 parts by mass or less per 100 parts by mass of the resin solid content of the aqueous coating composition. The content of the acrylic resin dispersion (B) may be 5 parts by mass or more, and may be 10 parts by mass or more. The content of the acrylic resin dispersion (B) may be 40 parts by mass or less, may be 30 parts by mass or less, and may be 20 parts by mass or less.

The solid component mass ratio (A : B) of the acrylic resin emulsion (A) to the acrylic resin dispersion (B) is 30 : 70 to 90 : 10. Thanks to this configuration, the storage stability of the aqueous coating composition is improved, and a coating film having an excellent appearance is obtained while the physical properties of the coating film are secured. The solid component mass ratio (A : B) may be 50 : 50 to 85 : 15, and may be 55 : 45 to 85 : 15.

The acrylic resin dispersion (B) has a branched hydrocarbon group having 4 to 24 carbon atoms (hereinafter conveniently referred to as hydrophobic group) in the core part and a hydrophilic resin (Bs) in the shell part. The resin forming the core part is conveniently referred to as hydrophobic resin (Bc). The "core part" and the "shell part" may be chemically linked together or may not be linked. The acrylic resin dispersion (B) has a hydrophobic resin (Bc) inside and a hydrophilic resin (Bs) outside, and at least a part of the hydrophobic resin (Bc) is covered with the hydrophilic resin (Bs).

The mass ratio (Bc : Bs) of the hydrophobic resin (Bc) to the hydrophilic resin (Bs) is, for example, 95 : 5 to 60 : 40. When the mass ratio of the hydrophilic resin (Bs) is 5% or more, the dispersibility of the core-shell type acrylic resin dispersion (B) in water is further improved, and the storage stability of the aqueous coating composition is improved. When the mass ratio of the hydrophilic resin (Bs) is 40% or less, the water resistance and the appearance of a coating film can be improved. The hydrophobic resin (Bc) : the hydrophilic resin (Bs) may be 90 : 10 to 70 : 30, and may be 85 : 15 to 75 : 25.

The "hydrocarbon group" is a group containing carbon and hydrogen, and means a group obtained by eliminating one hydrogen atom from a hydrocarbon. Examples of the hydrocarbon group include aliphatic hydrocarbon groups having 4 to 24 carbon atoms and aromatic hydrocarbons having 4 to 24 carbon atoms. The aliphatic hydrocarbon groups may be any of linear, branched, or cyclic, and may be saturated or unsaturated. Hydrogen bonded to carbon may have been replaced with a halogen atom or the like.

The number of the carbon atoms in the hydrophobic group may be 7 to 18, and may be 8 to 15. The hydrophobic group may be saturated. The hydrophobic group may be a branched alkyl group having 4 to 24 carbon atoms.

The hydrophilic resin (Bs) is a neutralized product of an acrylic resin having acid groups disposed to cover the core part.

### (Production method)

The acrylic resin dispersion (B) can be produced, for example, by multistage polymerization using a reactive solvent (x) having the hydrophobic group described above.

The acrylic resin dispersion (B) is produced, for example, by a method including: a first step of dropping a first monomer mixture containing a first acid group-containing α,β-ethylenically unsaturated monomer (a1) into a reactive solvent (x) having one glycidyl group and a hydrophobic group to synthesize a hydrophobic resin (Bc) and obtain a liquid containing the hydrophobic resin (Bc); a second step of dropping a second monomer mixture containing a second acid group-containing α,β-ethylenically unsaturated monomer (a2) into the liquid to synthesize an acid group-containing resin (Bs') and obtain a core-shell type acrylic resin (B') having the hydrophobic resin (Bc) and the acid group-containing resin (Bs'); a step of adding a basic compound to neutralize acid groups remaining in the core-shell type acrylic resin (B'); and a step of charging deionized water to cause phase inversion and obtain a varnish containing an acrylic resin dispersion (B) dispersed in the deionized water.

### <First step>

In the first step, radical polymerization of the first monomer mixture and a ring-opening addition reaction between the glycidyl group of the reactive solvent (x) and the acid group-containing monomer (a) proceed. In the first step, so-called solution polymerization is conducted.

It is possible to make the hydrophobic resin (Bc) contain a hydrophobic group by stepwise conducting the polymerization reaction of the first monomer mixture and the ring-opening reaction of the epoxy ring in the first step using the fact that the ring-opening reaction of the epoxy ring hardly occurs at a low temperature. For example, first, the temperature of the reaction system is lowered (for example, to 50°C or more and less than 130°C), and the first monomer mixture is polymerized to afford a precursor, and then the temperature is raised (for example, to 130°C or more and 180°C or less) to ring-open add the reactive solvent (x) to the precursor.

Examples of the starting monomer contained in the first monomer mixture include the same α,β-ethylenically unsaturated monomer as that to be used for producing the acrylic resin emulsion (A).

From the viewpoint of improving the physical properties of the resulting coating film, the mass of the acid group-containing monomer in the first monomer mixture may be 5 parts by mass or more and 30 parts by mass or less per 100 parts by mass of the first monomer mixture. The mass of the acid group-containing monomer may be 10 parts by mass or more. The mass of the acid group-containing monomer may be 25 parts by mass or less.

The reactive solvent (x) has one glycidyl group and a hydrophobic group. The reactive solvent (x) may be a monocarboxylic acid glycidyl ester. The monocarboxylic acid glycidyl ester is represented by, for example, the following general formula (1): 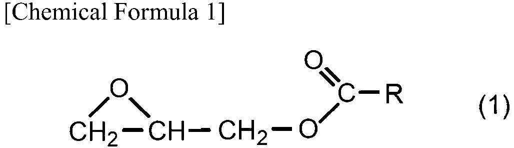 wherein R is a monovalent organic group, and includes the above-mentioned hydrophobic group.

The reactive solvent (x) is used, for example, in an amount such that the mass ratio of the hydrophobic resin (Bc) and the hydrophilic resin (Bs) in the resin particles having a core-shell structure (hydrophobic resin (Bc) : hydrophilic resin (Bs), % by mass) is 95 : 5 to 60 : 40.

### <Second step>

In the second step, polymerization of the second monomer mixture mainly proceeds, and an acid group-containing resin (Bs') is synthesized. When a basic compound is added in a subsequent step, the acid group is neutralized, and the acid group-containing resin (Bs') is hydrophilized to become a hydrophilic resin (Bs). The hydrophilic resin (Bs) acts as a dispersion component for dispersing the acrylic resin dispersion (B) in water to reduce the particle size of the resin particles and improve the dispersion stability thereof.

Following the second step, aging including adding a polymerization initiator, stirring, and heating may be conducted. The aging is conducted, for example, at the same temperature as in the second step for 0.5 hours or more and 3 hours or less.

The type and blending ratio of the starting monomers contained in the second monomer mixture may be the same as or different from those contained in the first monomer mixture. The first acid group-containing monomer (a1) and the second acid group-containing monomer (a2) may be the same or different.

From the viewpoint of improving the dispersion function of the resulting hydrophilic resin (Bs), in the second monomer mixture, the mass of the acid group-containing monomer may be 5 parts by mass or more and 30 parts by mass or less per 100 parts by mass of the second monomer mixture. The mass of the acid group-containing monomer may be 10 parts by mass or more. The mass of the acid group-containing monomer may be 25 parts by mass or less.

In the first step, the second step and the aging, a polymerization initiator may be used. The total use amount of the polymerization initiator is appropriately set according to, for example, the type and the amount of the starting monomer. The total use amount of the polymerization initiator may be, for example, 0.2 parts by mass or more and 2.0 parts by mass or less per 100 parts by mass of the total of the first monomer mixture and the second monomer mixture. The use amount of the polymerization initiator may be 0.2 parts by mass or more. The use amount of the polymerization initiator may be 1.5 parts by mass or less.

Examples of the polymerization initiator include 2,2'-azobisisobutyronitrile, benzoyl peroxide, 2,2-di(t-amylperoxy)butane, di-t-butyl peroxide, di-t-amyl peroxide (DTA), t-butyl peroctoate, and 2,2'-azobis(2-methylbutyronitrile).

### <Neutralization and phase inversion step>

The acid groups (typically, carboxy groups) remaining in the core-shell type acrylic resin (B') are neutralized with a basic compound. Thanks to this configuration, the core-shell type acrylic resin (B') can be dispersed in water. Thereafter, deionized water is charged to cause phase inversion. As a result, the core-shell type acrylic resin (B') is dispersed in water to afford a varnish containing the acrylic resin dispersion (B).

Phase inversion and water dispersion are conducted, for example, while a mixture of a varnish containing the neutralized core-shell type acrylic resin (B') and deionized water is stirred. The average particle size of the acrylic resin dispersion (B) can be further reduced by the stirring.

Examples of the basic compound include the same compounds as those recited as examples of the basic compound to be used for neutralization of the acrylic resin emulsion (A). The basic compound is added, for example, in such an amount that the neutralization ratio of the acid groups contained in the acrylic resin dispersion (B) is 70% or more and 100% or less. When the neutralization ratio is within this range, the water dispersibility of the acrylic resin dispersion (B) is improved, and the average particle size can be further reduced. The neutralization ratio may be 75% or more, may be 80% or more, may be 85% or more, and may be 90% or more.

### · Hydrophobic melamine resin (C)

The hydrophobic melamine resin (C) acts as a curing agent.

The hydrophobic melamine resin (C) has a structure in which groups R¹ to R⁶ are bonded to the periphery of a melamine nucleus (triazine nucleus) via three nitrogen atoms. In general, the hydrophobic melamine resin (C) may be a polynuclear body in which a plurality of melamine nuclei are bonded to each other, or may be a mononuclear body composed of one melamine nucleus.

The structure of the melamine nucleus is represented by, for example, the following general formula (2) 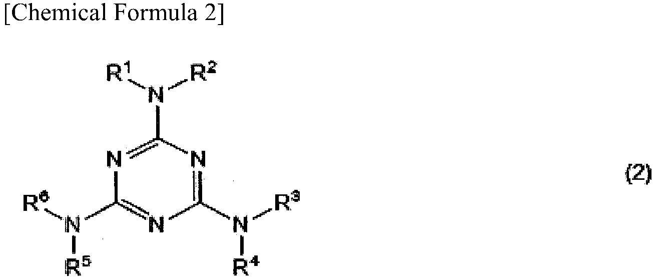 wherein the substituents R¹ to R⁶ each independently represent a hydrogen atom, an alkyl ether group, a methylol group, or a bonding moiety with another triazine ring.

The substituents R¹ to R⁶ each independently may be a hydrogen atom, an alkyl ether group (-CH₂-OR⁷), or a methylol group (-CH₂OH). The substituents R¹ to R⁶ and R⁷ each independently may be an alkyl group having 1 to 8 carbon atoms, and may be an alkyl group having 1 to 4 carbon atoms. The alkyl group may be either linear or branched. The alkyl group may be a methyl group, a n-butyl group, or an isobutyl group.

Generally, melamine resins are roughly classified into water-soluble melamine resins and hydrophobic melamine resins. The water-soluble melamine resins satisfy all of the following conditions (i) to (iii).
(i) The melamine resin has a number average molecular weight of 1,000 or less.
(ii) Among R¹ to R⁶ in the above general formula (1), at least one is a hydrogen atom (imino group) or CH₂OH (methylol group). That is, the total of the average imino group amount and the average methylol group amount is 1.0 or more.
(iii) In R¹ to R⁶ in the general formula (1), when R¹ to R⁶ are CH₂OR⁷, R⁷ is a methyl group.

The hydrophobic melamine resin is a melamine resin other than the water-soluble melamine resin. That is, any one of the following conditions (iv) to (vi) is satisfied.
(iv) The number average molecular weight of the melamine resin is more than 1,000.
(v) The total of the average imino group amount and the average methylol group amount is 1.0 or less.
(vi) Among R¹ to R⁶ in the above general formula (1), two or more of R¹ to R⁶ are CH₂OR⁷, R⁷ is an alkyl group having 1 to 4 carbon atoms, provided that at least one of R⁷s constituting R¹ to R⁶ is an alkyl group having 2 to 4 carbon atoms.

Examples of a commercially available product of the hydrophobic melamine resin (C) include CYMEL series (trade name) manufactured by Allnex such as CYMEL 202, CYMEL 204, CYMEL 211, CYMEL 232, CYMEL 235, CYMEL 236, CYMEL 238, CYMEL 250, CYMEL 251, CYMEL 254, CYMEL 266, CYMEL 267, and CYMEL 285 (these are melamine resins having both a methoxy group and a butoxy group); MYCOAT 506 (melamine resin having a butoxy group alone, manufactured by Mitsui Cytec, Ltd.); U-VAN 20N60 and U-VAN 20SE (U-VAN (trade name) series manufactured by Mitsui Chemicals, Inc.). These are used singly or two or more of them are used in combination.

The solid content of the hydrophobic melamine resin (C) is, for example, 10 parts by mass or more and 55 parts by mass or less per 100 parts by mass of the resin solid content of the aqueous coating composition. Thanks to this configuration, a curing reaction easily proceeds, and a coating film having high hardness is easily obtained. The solid content of the hydrophobic melamine resin (C) may be 20 parts by mass or more, and may be 25 parts by mass or more. The solid content of the hydrophobic melamine resin (C) may be 50 parts by mass or less, and may be 40 parts by mass or less.

The solid component mass ratio (B : C) of the acrylic resin dispersion (B) to the hydrophobic melamine resin (C) may be, for example, 10 : 90 to 50 : 50. Thanks to this configuration, the water dispersibility of the hydrophobic melamine resin can be further improved. The solid component mass ratio (B : C) may be 15 : 85 to 45 : 55, and may be 20 : 80 to 40 : 60.

### · Other resin components

The aqueous coating composition may comprise other resin component, as necessary. Examples of the other resin component include a water-soluble acrylic resin, a polyester resin dispersion, and a polyurethane resin dispersion. These are used singly or two or more of them are used in combination.

The content of the water-soluble acrylic resin is, for example, 1 part by mass or more and 60 parts by mass or less per 100 parts by mass of the resin solid content of the aqueous coating composition. The content of the water-soluble acrylic resin may be 2 parts by mass or more, and may be 5 parts by mass or more. The content of the water-soluble acrylic resin may be 50 parts by mass or less, may be 30 parts by mass or less, and may be 10 parts by mass or less.

The polyester resin dispersion also has a function of dispersing the hydrophobic melamine resin (C). On the other hand, polyester resins can induce yellowing. The polyester resins can cause yellowing particularly through a reaction with an isocyanate compound contained in a clear coating film. In consideration of this fact, the content of the polyester resin dispersion may be 10 parts by mass or less, may be 5 parts by mass or less, and may be 0 parts by mass per 100 parts by mass of the resin solid content of the aqueous coating composition.

The content of the polyurethane resin dispersion is, for example, 1 part by mass or more and 60 parts by mass or less per 100 parts by mass of the resin solid content of the aqueous coating composition. The content of the polyurethane resin dispersion may be 2 parts by mass or more, and may be 5 parts by mass or more. The content of the polyurethane resin dispersion may be 50 parts by mass or less, may be 30 parts by mass or less, and may be 10 parts by mass or less.

### · Other curing components

The aqueous coating composition may contain a curing component other than the hydrophobic melamine resin (C). Examples of such other curing components include a blocked isocyanate compound, an epoxy compound, an aziridine compound, a carbodiimide compound, an oxazoline compound, and a metal ion. These are used singly or two or more of them are used in combination.

### · Additives

The aqueous coating composition may comprise various additives, as necessary. Examples of such additives include film-forming assistants, surface conditioning agents, antiseptic agents, fungicides, defoaming agents, light stabilizers, ultraviolet absorbers, antioxidants, and pH adjusters.

### · Pigment

The aqueous coating composition may comprise a pigment. The pigment is not particularly limited, and examples thereof include: organic coloring pigments such as azo chelate pigments, insoluble azo pigments, condensed azo pigments, monoazo pigments, disazo pigments, diketopyrrolopyrrole pigments, benzimidazolone pigments, phthalocyanine pigments, indigo pigments, thioindigo pigments, perinone pigments, perylene pigments, dioxane pigments, quinacridone pigments, isoindolinone pigments, naphthol pigments, pyrazolone pigments, anthraquinone pigments, anthrapyrimidine pigments, and metal complex pigments; inorganic coloring pigments such as chrome yellow, yellow iron oxide, chromium oxide, molybdate orange, red iron oxide, titanium yellow, zinc flower, carbon black, titanium dioxide, cobalt green, phthalocyanine green, ultramarine, cobalt blue, phthalocyanine blue, and cobalt violet; mica pigments (titanium dioxide-coated mica, colored mica, metal-plated mica); graphite, aluminum flakes, alumina flakes, metal titanium flakes, stainless flakes, plate-like iron oxide, phthalocyanine flakes, metal-plated glass flakes, other colored and colored flat pigments; and extender pigments such as titanium oxide, calcium carbonate, barium sulfate, barium carbonate, magnesium silicate, clay, talc, silica, and calcined kaolin.

### · Preparation of aqueous coating composition

The method for preparing the aqueous coating composition is not particularly limited, and the aqueous coating composition can be prepared by stirring components with a stirrer or the like. The pigment can be processed into a pigment paste in which the pigment is dispersed in advance in a vehicle containing water, a surfactant, a dispersant or the like with a sand grinding mill or the like, and then can be mixed with other components.

### [Coated article]

A coated article is obtained using the aqueous coating composition according to the present disclosure. The aqueous coating composition according to the present disclosure is suitably used for forming a coating film adjacent to a clear coating film. The coated article includes, for example, an article to be coated and a multilayer coating film in which a colored base coating film, a metallic base coating film, and a clear coating film are laminated in this order. The metallic base coating film is formed from the aqueous coating composition according to the present disclosure. In this case, the aqueous coating composition according to the present disclosure includes the aforementioned mica pigment and/or flat pigment. In the coated article, a mixed layer between the metallic base coating film and the clear coating film is inhibited, and the coated article has an excellent appearance.

### (Article to be coated)

Examples of the material of the article to be coated include metal, resin, and glass. Examples of the article to be coated specifically include automobile bodies such as passenger cars, trucks, motorcycles, and buses, parts for automobile bodies, and automobile parts such as spoilers, bumpers, mirror covers, grilles, and door knobs.

Examples of the metal include iron, copper, aluminum, tin, zinc, and alloys thereof (e.g., steel). Examples of a metallic article to be coated typically include steel sheets such as cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based plated steel sheets, and tin-based plated steel sheets.

The metallic article to be coated may have been subjected to surface treatment. Examples of the surface treatment include phosphate salt treatment, chromate treatment, zirconium chemical conversion treatment, and composite oxide treatment. The metallic article to be coated may have been further coated with an electrodeposition coating material after the surface treatment. The electrodeposition coating material may be of a cationic type or of an anionic type.

Examples of the resin include polyethylene resin, EVA resin, polyolefin resins (polyethylene resin, polypropylene resin, etc.), vinyl chloride resin, styrol resin, polyester resins (including PET resin, PBT resin, etc.), polycarbonate resin, acrylic resin, acrylonitrile-butadiene-styrene (ABS) resin, acrylonitrile-styrene (AS) resin, polyamide resin, acetal resin, phenol resin, fluororesin, melamine resin, urethane resin, epoxy resin, and polyphenylene oxide (PPO). The resin article to be coated may have been subjected to degreasing treatment.

### (Colored base coating film)

The colored base coating film is interposed between the article to be coated and the metallic base coating film. The colored base coating film makes the coating surface uniform, and unevenness of the metallic base coating film is easily inhibited.

The thickness of the colored base coating film after curing may be 5 µm or more and 60 µm or less from the viewpoint of the smoothness and the chipping resistance of the coated article.

The colored base coating film is formed from a colored base coating composition. The colored base coating composition may be either aqueous or solvent-based. The colored base coating composition may be aqueous. The aqueous colored base coating composition includes, for example, the acrylic resin emulsion and the melamine resin described above. The solvent-based colored base coating composition includes an organic solvent as a main solvent. In the solvent-based colored base coating composition, the proportion of the organic solvent in the solvent is 50% by mass or more, may be 70% by mass or more, and may be 100% by mass. The colored base coating composition may further comprise a pigment and various additives.

### (Metallic base coating film)

The metallic base coating film is formed from the aqueous coating composition according to the present disclosure.

The thickness of the base coating film is not particularly limited, and is appropriately set according to the purpose. The thickness of the base coating film after curing may be 0.1 µm or more and 45 µm or less.

### (Clear coating film)

The clear coating film improves the gloss of the coated article and prevents the pigment blended in the underlying layer from falling off and jumping out.

The thickness of the clear coating film after curing may be 15 µm or more and 50 µm or less from the viewpoint of scratch resistance and smoothness.

The clear coating film is formed from a clear coating composition. The clear coating composition may be a solvent-based composition, may be an aqueous composition, and may be a powder type composition. The clear coating composition may be a solvent-based composition. In view of transparency, resistance to acid etching, and so on, the solvent-based clear coating composition may include a hydroxy group-containing acrylic resin and/or a polyester resin as a coating film-forming resin and an amino resin and/or an isocyanate compound as a curing agent. The solvent-based clear coating composition may also include an acrylic resin and/or a polyester resin having a carboxylic acid and/or an epoxy group. The clear coating composition may include the previously described various pigments as long as transparency is not impaired. The clear coating composition may comprise various additives, as necessary.

The clear coating composition may contain an isocyanate compound as a curing agent. The metallic base coating film containing an acrylic resin as a main coating film-forming resin hardly undergoes yellowing caused by a reaction with the isocyanate compound contained in the clear coating film.

The isocyanate compound has at least two isocyanate groups in one molecule. Examples of the isocyanate compound include aliphatic polyisocyanates, alicyclic polyisocyanates, aliphatic polyisocyanates having an aromatic ring not bonded to an isocyanate group in the molecule (araliphatic polyisocyanates), aromatic polyisocyanates, and derivatives of these polyisocyanates. The examples specifically include aromatic polyisocyanates such as tolylene diisocyanate, 4,4'-diphenylmethane diisocyanate, xylylene diisocyanate, and metaxylylene diisocyanate; aliphatic polyisocyanates such as hexamethylene diisocyanate; alicyclic polyisocyanates such as isophorone diisocyanate; and multimers thereof such as biuret type multimers, isocyanurate type multimers, and adduct type multimers. These are used singly or two or more of them are used in combination.

### [Method for producing multilayer coating film]

A multilayer coating film is produced, for example, by a method including a step of applying a colored base coating composition to an article to be coated to form an uncured colored base coating film, a step of curing the uncured colored base coating film, a step of applying the aqueous coating composition according to the present disclosure to form an uncured metallic base coating film, a step of curing the uncured metallic base coating film, a step of applying a clear coating composition to the metallic base coating film to form an uncured clear coating film, and a step of curing the uncured clear coating film.

When the clear coating film is formed, the colored base coating film and the metallic base coating film may be either cured or uncured. From the viewpoint of productivity, adhesion, and water resistance, a plurality of coating film are formed in layers without being cured (so-called wet-on-wet application), and then the uncured coating films are simultaneously cured.

The wet-on-wet application includes a step of applying a colored base coating composition to an article to be coated to form an uncured colored base coating film, a step of applying the aqueous coating composition according to the present disclosure to the uncured colored base coating film to form an uncured metallic base coating film, a step of applying a clear coating composition to the uncured metallic base coating film to form an uncured clear coating film, and a step of curing the uncured colored base coating film, the uncured metallic base coating film, and the uncured clear coating film at one time.

After the application of the colored base coating composition, preheating may be conducted before the aqueous coating composition according to the present disclosure is applied. After the aqueous coating composition according to the present disclosure is applied, preheating may be conducted before the clear coating composition is applied. The preheating is conducted, for example, by a method in which the item is left standing for 5 minutes or more and 15 minutes or less under a temperature condition of 20°C or more and 25°C or less, or a method in which the item is heated for 30 seconds or more and 10 minutes or less under a temperature condition of 50°C or more and 80°C or less.

Examples of an application method include multistage application (typically, two-stage application) using air-spray application, airless-spray application, electrostatic spray application, or air-electrostatic spray application, or application combining air-electrostatic spray application and a rotary atomization type electrostatic applicator.

Curing of each coating composition is conducted, for example, under conditions of a heating temperature of 80°C to 180°C and a heating time of 5 minutes to 60 minutes.

### EXAMPLES

The present invention will be described in more detail by way of the following examples, to which the present invention is not intended to be limited. In the examples, "parts" and "%" are on a solid component mass basis unless otherwise indicated.

### (Weight average molecular weight)

The weight average molecular weight was measured using "HLC8220GPC" (trade name, manufactured by Tosoh Corporation) as a GPC device and four columns "Shodex KF-606M" and "Shodex KF-603" (both products are manufactured by Showa Denko K.K., trade names) under the conditions of a mobile phase: tetrahydrofuran, a measurement temperature: 40°C, a flow rate: 0.6 cc/min, and a detector: RI.

The solid concentration was calculated from the residue remaining when the object was heated at 150°C.

The average particle size was defined to be a 50% average particle size (D50) in a volume-based particle size distribution measured using a Microtrac particle size distribution analyzer having a product name of "UPA-150" manufactured by Nikkiso Co., Ltd.

The acid value and the hydroxyl value were calculated from the composition of the starting monomer.

### [Production Example A] Production of hydroxy group-containing acrylic resin emulsion (A)

126.5 parts of deionized water was added to a reaction vessel, and was heated to 80°C while being mixed and stirred in a nitrogen stream. Subsequently, a monomer emulsion composed of 100 parts of a monomer mixture (including 27.61 parts of methyl acrylate, 53.04 parts of ethyl acrylate, 4.00 parts of styrene, 9.28 parts of 2-hydroxyethyl methacrylate, 3.07 parts of methacrylic acid, and 3.00 parts of allyl methacrylate), 1.1 parts of an emulsifier (trade name: ADEKA REASOAP SR-10, manufactured by ADEKA CORPORATION), and 80 parts of deionized water and an initiator solution composed of 0.3 parts of ammonium persulfate and 10 parts of deionized water were dropped in parallel into the reaction vessel over 2 hours. After the completion of the dropping, aging was conducted at that temperature for 2 hours.

Thereafter, the mixture was cooled to 40°C and was filtered through a 400 mesh filter. 20 parts of deionized water and 0.32 parts of dimethylaminoethanol were added to the filtrate to adjust the pH to 6.5. As a result, a hydroxy group-containing acrylic resin emulsion (A) having an average particle size of 90 nm, a Tg of -9.5°C, a nonvolatile content of 30%, an acid value of 20 mg KOH/g, and a hydroxyl value of 40 mg KOH/g was obtained.

### [Production Example B-1] Production of core-shell type acrylic resin dispersion (B-1)

### (1) Synthesis of hydrophobic acrylic resin (Bc)

A reaction vessel equipped with a stirrer, a temperature controller, a cooling tube, and a dropping device was charged with 30 parts of a reactive solvent (CAE, glycidyl ester of monocarboxylic acid having a branched alkyl group having nine carbon atoms, trade name: Cardura E10P, manufactured by Hexion Inc., boiling point: 251 to 278°C), which was then heated to 165°C and refluxed while being stirred. Separately, a mixture of 9.47 parts of acrylic acid (AA), 5.8 parts of 2-hydroxyethyl methacrylate (HEMA), 11.6 parts of cyclohexyl methacrylate (CHMA), 7.5 parts of n-butyl acrylate (NBA), 16.9 parts of styrene (ST), 0.28 parts of a polymerization initiator (DTA, trade name: Luperox DTA, manufactured by ARKEMA Yoshitomi, Ltd.), and 6.5 parts of a high-boiling solvent (dipropylene glycol monomethyl ether (DPM)) was prepared. This mixture was added dropwise to the reaction vessel at 165°C over 3.5 hours, and a polymerization reaction and a ring-opening addition reaction were conducted.

### (2) Synthesis of carboxy group-containing acrylic resin (Bs')

Separately, a mixture of 3.43 parts of AA, 3.8 parts of HEMA, 2.7 parts of CHMA, 2.9 parts of NBA, 5.8 parts of ST, 0.11 parts of a polymerization initiator (Luperox DTA), and 2.4 parts of a high-boiling solvent (DPM) was prepared. This mixture was added dropwise to the aforementioned reaction vessel at 165°C over 1 hour while being stirred, and the resulting mixture was polymerized as it was for 1 hour. Furthermore, a mixture of 0.1 parts of a polymerization initiator (Luperox DTA) and 0.1 parts of a high-boiling solvent (DPM) was added to the reaction vessel, and the resulting mixture was subjected to a polymerization reaction at 165°C for 1 hour while being stirred.

In this way, a varnish containing a core-shell type acrylic resin having a hydrophobic resin (Bc) and an acid group-containing resin (Bs') and having a solid concentration of 91% by mass was obtained.

### (3) Neutralization and phase inversion

To the varnish was added a basic compound (dimethylethanolamine, DMEA) at a ratio of 5.33 parts to 100 parts of the acrylic resin at 80°C, and the mixture was stirred for 15 minutes. The neutralization ratio of the carboxy groups was 90%. Subsequently, 150 parts of deionized water was added dropwise to the neutralized varnish at 80°C and stirred in parallel, affording a milky white dispersion containing acrylic resin particles.

The acrylic resin particles contained in the dispersion were expected to have a core-shell structure, and the mass ratio of the core part was calculated to be 81.4% and the mass ratio of the shell part was calculated to be 18.6%. The acrylic resin particles had an average particle size of 57 nm, an acid value of 37.2 mg KOH/g, and a weight average molecular weight of 32,000.

### [Production Examples B-2 to B-6, Comparative Production Example b-1]

Core-shell type acrylic resin dispersions were obtained in the same manner as in Production Example B-1 except that the kind of the starting monomer, the neutralization ratio, and so on were changed as shown in Table 1.

### [Production Example 1] Production of water-soluble acrylic resin

23.89 parts of tripropylene glycol methyl ether and 16.11 parts of propylene glycol methyl ether were added to a reaction vessel, and the temperature was raised to 105°C while mixing and stirring in a nitrogen stream. Separately, a monomer mixture containing 13.1 parts of methyl methacrylate, 68.4 parts of ethyl acrylate, 11.6 parts of 2-hydroxyethyl methacrylate, and 6.9 parts of methacrylic acid was prepared. 100 parts of this monomer mixture and an initiator solution composed of 10.0 parts of tripropylene glycol methyl ether and 1 part of t-butyl peroxy-2-ethylhexanoate were dropped into the reaction vessel in parallel over 3 hours. After the completion of the dropping, aging was conducted at that temperature for 0.5 hours.

Furthermore, an initiator solution composed of 5.0 parts of tripropylene glycol methyl ether and 0.3 parts of t-butyl peroxy-2-ethylhexanoate was dropped into the reaction vessel over 0.5 hours. After the completion of the dropping, aging was conducted at that temperature for 2 hours.

Subsequently, 16.1 parts of the solvent was distilled off at 110°C under reduced pressure (70 torr) with a desolvating apparatus, and then, 204 parts of deionized water and 7.1 parts of dimethylaminoethanol were added. As a result, a water-soluble acrylic resin solution having a nonvolatile content of 30%, an acid value of 40 mg KOH/g, a hydroxyl value of 50 mg KOH/g, a Tg of 10°C, and an Mw of 30,000 was obtained.

### [Production Example 2] Production of polyester resin dispersion

A reaction vessel equipped with a stirrer, a nitrogen inlet tube, a temperature controller, a condenser, and a decanter was charged with 250 parts of trimethylolpropane, 824 parts of adipic acid, and 635 parts of cyclohexanedicarboxylic acid. The temperature was raised to 180°C, and a condensation reaction was conducted until water was no longer distilled out. After cooling to 60°C, 120 parts of phthalic anhydride was added to the reaction vessel. Subsequently, the temperature was raised to 140°C and this temperature was maintained for 60 minutes, affording a polyester resin. After cooling to 80°C, 59 parts of dimethylaminoethanol (corresponding to 80% of the acid value of the resin (neutralization ratio: 80%)) and 1920 parts of deionized water were charged into the reaction vessel, and stirred. As a result, a polyester resin dispersion having a solid content of 45% by mass, a hydroxyl value of 110 mg KOH/g, an acid value of 15 mg KOH/g, a Tg of -14°C, and an Mw of 7,000 was obtained.

### [Production Example 3] Production of phosphoric acid group-containing acrylic resin

A 1-liter reaction vessel equipped with a stirrer, a thermostat, and a cooling tube was charged with 40 parts of ethoxypropanol. Separately, a monomer solution composed of 1.7 parts of azobisisobutyronitrile and 40 parts by mass of a solution prepared by dissolving 20 parts of Phosmer PP (acid phosphooxyhexa(oxypropylene) monomethacrylate manufactured by Uni-Chemical Co., Ltd.) in 4 parts of styrene, 35.96 parts of n-butyl acrylate, 18.45 parts of ethylhexyl methacrylate, 13.92 parts of 2-hydroxyethyl methacrylate, 7.67 parts of methacrylic acid, and 20 parts of ethoxypropanol was prepared. 121.7 parts of this monomer solution was dropped to that reaction vessel at 120°C over 3 hours. Stirring was continued for additional one hour, affording a phosphoric acid group-containing acrylic resin (nonvolatile content: 63%) having an acid value of 105 mg KOH/g, an acid value based on a phosphoric acid group of 55 mg KOH/g, a hydroxyl value of 60 mg KOH/g, and a number average molecular weight of 6,000.

**[Table 1]**

| Production Example No. | | | Production Example 1 | Production Example 2 | Production Example 3 | Production Example 4 | Production Example 5 | Production Example | Comparative Production Example 1 |
|---|---|---|---|---|---|---|---|---|---|
| | | | B-1 | B-2 | B-3 | B-4 | B-5 | B-6 | b-1 |
| Hydrophobic resin (Bc) | Starting monomer | AA | 9.47 | 12.62 | 9.47 | 7.89 | 15.78 | 9.47 | - |
| | | HEMA | 10.3 | 10.3 | 10.3 | 6.1 | 10.3 | 5.8 | 12.1 |
| | | MMA | - | 6.0 | - | - | 1.7 | - | 21.3 |
| | | CHMA | - | - | 8.2 | 13.5 | - | 11.6 | - |
| | | NBA | 2.0 | 3.9 | 6.6 | 5.1 | 1.1 | 7.5 | 5.0 |
| | | NBMA | 11.4 | - | - | - | - | - | - |
| | | EHA | - | - | - | - | - | - | 11.2 |
| | | ST | 18.2 | 8.6 | 16.9 | 23.8 | 2.5 | 16.9 | 2.6 |
| | | MAA anhydride | - | - | - | - | - | - | 0.8 |
| | Polymerization initiator | DTA | 0.40 | 0.40 | 0.39 | 0.78 | 0.40 | 0.39 | 1.85 |
| | Reactive solvent | CAE | 30.0 | 40.0 | 30.0 | 25.0 | 50.0 | 30.0 | - |
| | High-boiling solvent | DPM | 6.5 | 6.5 | 6.5 | 6.5 | 6.5 | 6.5 | 6.5 |
| Hydrophilic resin (Bs') | Starting monomer | AA | 4.78 | 3.43 | 4.78 | 1.91 | 3.43 | 2.63 | 2.3 |
| | | HEMA | 3.7 | 3.7 | 3.7 | 3.8 | 3.7 | 3.8 | 10.9 |
| | | HPMA | - | - | - | - | - | - | - |
| | | MMA | - | 3.8 | - | - | 3.8 | - | 18.0 |
| | | CHMA | - | - | 3.7 | 2.7 | - | 2.7 | - |
| | | NBA | 0.4 | 2.4 | 2.3 | 1.5 | 2.4 | 2.9 | 4.2 |
| | | NBMA | 4.8 | - | - | - | - | - | - |
| | | EHA | - | - | - | - | - | - | 9.4 |
| | | ST | 4.9 | 5.3 | 4.1 | 8.7 | 5.3 | 6.6 | 2.2 |
| | Polymerization initiator | DTA | 0.11 | 0.11 | 0.11 | 0.11 | 0.11 | 0.11 | 0.65 |
| | High-boiling solvent | DPM | 2.5 | 2.5 | 2.5 | 2.5 | 2.5 | 2.5 | 2.5 |
| Varnish | Solid component | % by mass | 91 | 91 | 91 | 91 | 91 | 91 | 91 |
| | High-boiling solvent | % by mass | 9 | 9 | 9 | 9 | 9 | 9 | 9 |
| Acrylic resin dispersion | Weight average molecular weight | | 32000 | 28000 | 46000 | 15000 | 28000 | 23000 | 34000 |
| | Core part | % by mass | 81.4 | 81.4 | 81.4 | 81.4 | 81.4 | 81.4 | 53.0 |
| | Shell part | % by mass | 18.6 | 18.6 | 18.6 | 18.6 | 18.6 | 18.6 | 47.0 |
| | Acid value | mgKOH/g | 37.2 | 26.7 | 37.2 | 25.53 | 26.7 | 20.5 | 20.35 |
| | Average particle size | nm | 57 | 50 | 57 | 115 | 79 | 79 | 101 |

### [Example 1]

### (i) Preparation of aqueous coating composition

5 parts of the water-soluble acrylic resin (resin solid content: 30%) described above, 3.6 parts of 10% by mass dimethylaminoethanol, 40 parts of the hydroxy group-containing acrylic resin emulsion (A), 10 parts of the core-shell type acrylic resin dispersion (B-1) (resin solid content: 36%), 40 parts of the melamine resin (C-1), and 5 parts of a urethane resin dispersion (trade name: N-800T, manufactured by Sanyo Chemical Industries, Ltd.) were mixed and uniformly dispersed.

Next, aluminum flakes (average particle size: 14 µm, manufactured by Toyo Aluminium K.K., active ingredient: 66%) in an amount of 27.6 parts per 100 parts of the resin solid content, 5.52 parts of the phosphoric acid group-containing acrylic resin described above, 0.5 parts of lauryl acid phosphate, 21.25 parts of 2-ethylhexanol, 8.5 parts of 2-ethylhexyl glycol, and 15 parts of a surfactant (trade name: SURFYNOL 440, manufactured by Air Products and Chemicals, Inc., polyolated product of acetylene-based dialcohol (solid content: 100%) were uniformly dispersed. Dimethylaminoethanol was added to this dispersion such that the pH was adjusted to 8.1, and then the resulting mixture was diluted with deionized water, affording an aqueous coating composition.

Details of the melamine resin used are shown in Table 2.

**[Table 2]**

| Melamine resin | Hydrophobic/Hydrophilic | | Trade name, manufacturer | Number average molecular weight | Average amount of functional groups | | |
|---|---|---|---|---|---|---|---|
| | | | | Mn | Amount of methylol group | Amount of imino group | Total |
| C-1 | Hydrophobic | Condition (vi): One or more R7s are butyl groups. | CYMEL 204, manufactured by Allnex GMBH | 795 | 0.8 | 1.28 | 2.08 |
| C-2 | Hydrophobic | Conditions (iv), (vi): One or more R7s are butyl groups. | CYMEL 250, manufactured by Allnex GMBH | 1007 | 0.25 | 1.35 | 1.6 |
| C-3 | Hydrophobic | Condition (vi): One or more R7s are butyl groups. | MYCOAT 508, manufactured by Mitsui Cytec, Ltd. | 980 | 0.78 | 1.58 | 2.36 |
| C-4 | Hydrophobic | Condition (vi): One or more R7s are butyl groups. | CYMEL 254, manufactured by Allnex GMBH | 730 | 0.19 | 1.56 | 1.75 |
| c-1 | Hydrophilic | All of conditions (i) to (iii) are satisfied. | CYMEL 327, manufactured by Allnex GMBH | 470 | 0.24 | 1.47 | 1.71 |

### (ii) Formation of multilayer coating film

A cationic electrodeposition coating material (trade name: POWERNICS 150, manufactured by Nippon Paint Co., Ltd.) was electrodeposition coated on a dull steel sheet (thickness: 0.8 mm, length: 30 cm, width: 40 cm) treated with zinc phosphate such that a dry coating film thickness of 20 µm was attained, followed by heat-curing at 160°C for 30 minutes and subsequent cooling, and thus an article to be coated having a cured electrodeposition coating film was obtained.

Onto the article to be coated, AQUAREX AR-3100 (trade name, aqueous base coating material manufactured by Nippon Paint Automotive Coatings Co., Ltd.) was applied with a rotary atomization type electrostatic applicator such that a dry film thickness of 10 µm was attained. After the application, setting was conducted for 4 minutes, affording an uncured colored base coating film.

Subsequently, the aqueous coating composition prepared as described above was diluted with ion-exchanged water such that the solid concentration was 23% by mass. Next, the diluted aqueous coating composition was air-spray applied to the uncured colored base coating film at a room temperature of 23°C such that a dry film thickness of 8 µm was attained. After setting for 4 minutes, preheating was conducted at 80°C for 5 minutes. As a result, an uncured metallic base coating film was obtained.

The coated plate obtained above was allowed to cool to room temperature, and a clear coating composition (two-pack urethane curable clear coating material (trade name: Polyure Excel O-3100 Clear, manufactured by Nippon Paint Automotive Coatings Co., Ltd.)) was air-spray applied such that a dry film thickness of 35 µm was attained, followed by setting for 7 minutes. As a result, an uncured clear coating film was obtained.

Finally, the coated plate was heated with a dryer at 140°C for 30 minutes, whereby a multilayer coating film including a colored base coating film, a metallic base coating film, and a clear coating film in this order was formed.

### [Examples 2 to 15, Comparative Examples 1 to 4]

Aqueous coating compositions were prepared and multilayer coating films were formed in the same procedure as in Example 1 except that the components to be blended and/or the amounts thereof were changed as shown in Table 3.

### [Evaluation]

The following evaluations were conducted using the aqueous coating compositions or multilayer coating films obtained in Examples and Comparative Examples. The results of the evaluations are shown in the following table.

### (1) Coating film appearance

The Short Wave (SW) value (measurement wavelength: 300 to 1,200 µm) of a multilayer coating film was measured using wave-scan DOI (trade name, manufactured by BYK-Gardner GmbH). The obtained SW value was evaluated according to the following criteria. The smaller the SW value is, the higher the smoothness of the coating film is meant to be. With rating B or more, the multilayer coating film can be evaluated to be excellent in appearance.

### (Evaluation criteria)

A: $SW value \leq 20$
B: $20 < SW value \leq 30$
C: $31 < SW value$

### (2) Yellowing

A multilayer coating film was subjected to an accelerated weatherability test for 1600 hours in accordance with JIS B 7753 using Sunshine Weather Meter S80 (sunshine carbon arc accelerated weathering tester, manufactured by Suga Test Instruments Co., Ltd.).

Before and after the accelerated weatherability test, the b value was measured with a chroma meter (model: CR-331, manufactured by Minolta Co., Ltd.). The difference between the measurements was calculated and evaluated according to the following criteria. The b value indicates the yellowness of the coating film, and the smaller the Δb value is, the less yellowing is. With rating B or more, the multilayer coating film can be evaluated to be suitable for practical use.

### (Evaluation criteria)

A: $Δb value < 0.3$
B: $0.3 \leq Δb value < 0.5$
C: $0.5 \leq Δb value$

### (3) Storage stability

Multilayer coating films (X, Y) for evaluation were formed in the same manner as described above using an aqueous coating composition immediately after the preparation in an Example or a Comparative Example and an aqueous coating composition stored at 40°C for one month after the preparation. The appearance (smoothness) and the FF property of both multilayer coating films were visually observed and evaluated according to the following criteria. With rating B or more, the aqueous coating composition can be evaluated to be excellent in storage stability.

### (Evaluation criteria)

A: No change is observed between the multilayer coating films X and Y.
B: The smoothness of the multilayer coating film Y is slightly lower than that of the multilayer coating film X, or slight sagging and/or a decrease in FF property are observed on the edge of the multilayer coating film Y.
C: The smoothness of the multilayer coating film Y is much lower than that of the multilayer coating film X, apparent sagging and/or a significant decrease in FF property is observed on the edge of the multilayer coating film Y, or coating film defects such as cissing, hollows, or seeds are generated in the multilayer coating film Y.

### (4) Color reversion

Using a spectrophotometer (trade name: X-Rite MA68II, manufactured by X-Rite Inc.), the lightness (L₅) at 15° (front) and the lightness (L₁₁₀) at 110° (shade) of a multilayer coating film obtained in the same manner as described above were measured, and a difference therebetween was determined. It can be said that the larger the difference is, the higher the FF property is and the more the color reversion is inhibited. With rating B or more, the multilayer coating film can be evaluated to be suitable for practical use.

### (Evaluation criteria)

A: $90 \leq {L}_{5} - {L}_{110}$
B: $80 \leq {L}_{5} - {L}_{110} < 90$
C: ${L}_{5} - {L}_{110} < 80$

### (5) Water resistance

A test plate obtained in the same manner as described above was immersed in warm water at 40°C for 240 hours. Thereafter, the test plate was taken up from water and dried at normal temperature for 1 hour. The coating film appearance after drying was visually observed, and the presence or absence of white blur was evaluated according to the following criteria. With rating B or more, the coating film can be evaluated to be excellent in water resistance.

### (Evaluation criteria)

A: No white blur is observed.
B: Slight white blur is observed.
C: White blur is clearly observed.

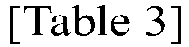

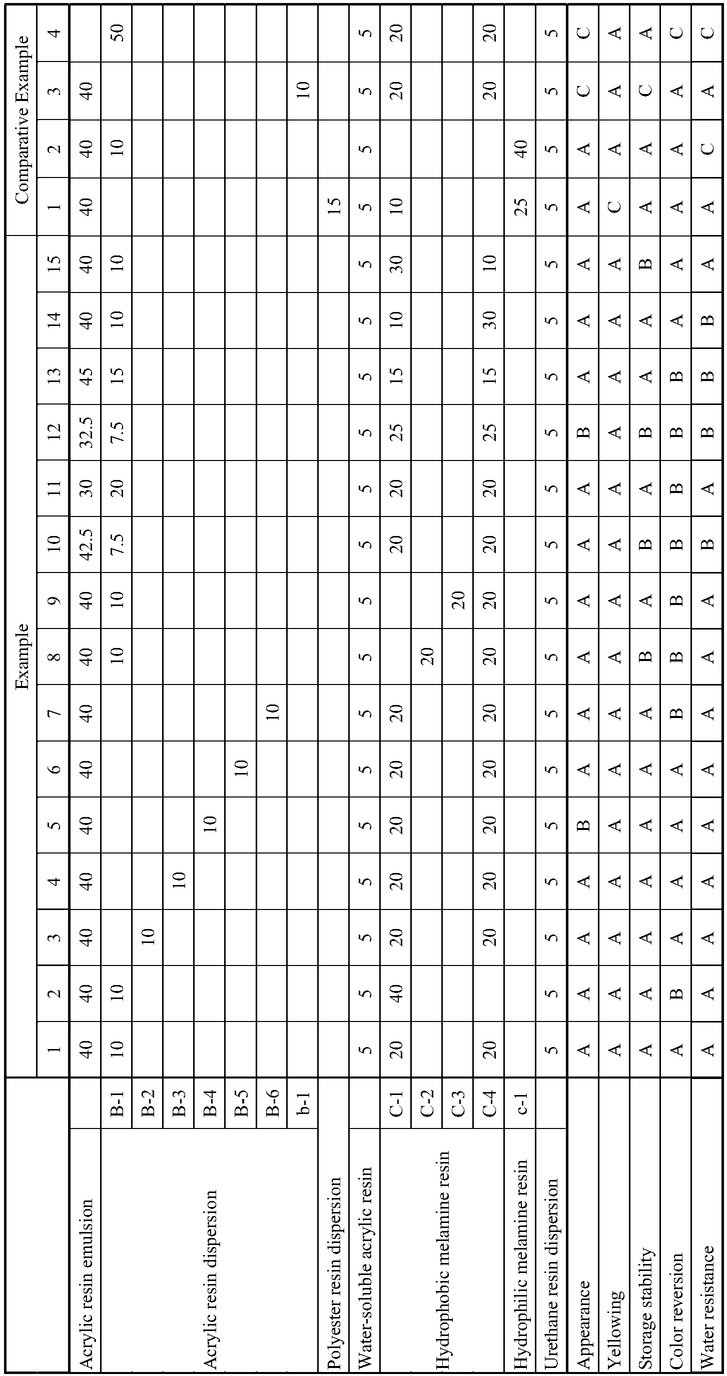

### INDUSTRIAL APPLICABILITY

The aqueous coating composition of the present disclosure provides a coating film being excellent in appearance and inhibited from yellowing while water resistance is secured. Such an aqueous coating composition is suitable for coating automobile bodies and members for automobiles.

This application claims priority based on Japanese Patent Application No. 2023-199319, which was filed in Japan on November 24, 2023, the disclosure of which application is incorporated herein by reference in its entirety.

## Claims

1. An aqueous coating composition comprising:
a hydroxy group-containing acrylic resin emulsion (A);
a core-shell type acrylic resin dispersion (B); and
a hydrophobic melamine resin (C), wherein
the core-shell type acrylic resin dispersion (B) has a branched hydrocarbon group having 4 to 24 carbon atoms in a core part, a shell part has a hydrophilic resin, and
a solid component mass ratio (A : B) of the hydroxy group-containing acrylic resin emulsion (A) to the core-shell type acrylic resin dispersion (B) is 30 : 70 to 90 : 10.

2. The aqueous coating composition according to claim 1, wherein a solid component mass ratio (B : C) of the core-shell type acrylic resin dispersion (B) to the hydrophobic melamine resin (C) is 10 : 90 to 50 : 50.

3. The aqueous coating composition according to claim 1 or 2, wherein the core-shell type acrylic resin dispersion (B) has an acid value of 25 mg KOH/g or more and 50 mg KOH/g or less.

4. The aqueous coating composition according to any one of claims 1 to 3, wherein the core-shell type acrylic resin dispersion (B) has a weight average molecular weight of 7,600 or more and 80,000 or less.
